## Europäisches Patentamt
## European Patent Office
## Office européen des brevets

(19)

(11) Veröffentlichungsnummer: **0 128 292**
**B1**

(12) # EUROPÄISCHE PATENTSCHRIFT

(45) Veröffentlichungstag der Patentschrift:
**07.01.88**

(51) Int. Cl.⁴: **G 01 L 1/16, G 01 L 15/00**

(21) Anmeldenummer: **84103724.5**

(22) Anmeldetag: **04.04.84**

(54) **Vorrichtung zur Erfassung von Drücken.**

(30) Priorität: **18.04.83 DE 3314031**

(43) Veröffentlichungstag der Anmeldung:
**19.12.84 Patentblatt 84/51**

(45) Bekanntmachung des Hinweises auf die Patenterteilung:
**07.01.88 Patentblatt 88/1**

(84) Benannte Vertragsstaaten:
**BE DE FR GB IT**

(56) Entgegenhaltungen:
**DE - B - 2 529 475**
**DE - B - 2 559 223**

**IEEE TRANSACTIONS ON SONICS AND ULTRASONICS, vol. SU-25, no. 5, September 1978 J.D. PLUMMER et al. "Two-dimensional transmit/receive ceramic piezoelectric arrays : construction and performance", Seiten 273-280**

(73) Patentinhaber: **Siemens Aktiengesellschaft Berlin und München, Wittelsbacherplatz 2, D-8000 München 2 (DE)**

(72) Erfinder: **Schewe, Herbert, Dr., Haydnstrasse 58, D-8522 Herzogenaurach (DE)**
Erfinder: **Schmidt, Otto, Gebbertstrasse 162, D-8520 Erlangen (DE)**

## Beschreibung

Die Erfindung bezieht sich auf eine Vorrichtung und ein Verfahren zur Erfassung von Drücken mit mehreren elektromechanischen Wandlern, die als Matrix in Zeilen und Spalten geordnet sind und denen jeweils ein erster elektronischer Schalter zugeordnet ist.

Es ist ein piezoelektrischer Drucksensor für Kraftfahrzeuge bekannt, bei dem zwei piezoelektrische Kristalle, die an einem Kraftfahrzeug montiert sind, elektrisch parallelgeschaltet sind. Diesen piezoelektrischen Kristallen sind ein Spannungsbegrenzer, ein Integrator, ein Detektor und eine Auslösevorrichtung zugeordnet. Als Spannungsbegrenzer ist eine Zener-Diode vorgesehen und als Integrator wird eine Reihenschaltung aus einem Widerstand und einer Kapazität verwendet. Ferner ist als Detektor ein Feldeffekttransistor FET vorgesehen, dessen Gate- und Sourceanschluss mit der Kapazität des Integrators verbunden sind. Die Auslösevorrichtung ist dem Drainanschluss des Feldeffekttransistors FET zugeordnet (kanadische Patentschrift 950 992). Durch diese Gestaltung des Drucksensors für Kraftfahrzeuge können nur dynamische jedoch keine statische Drücke erfasst werden.

Ferner ist eine Vorrichtung zur Auslese eines zweidimensionalen Ultraschallbildes mittels eines integrierten Akustikarrays bekannt, dessen Elementarwandler als Matrix in Zeilen und Spalten geordnet sind und denen jeweils ein MOS-FET-Verstärker (metal oxid semiconductor field effect transistor) zugeordnet ist, der als Schalter vorgesehen ist. Bei dieser Vorrichtung sind jeweils 16 Verstärker zu einem Bauelement integriert. Durch diese Massnahme wird jeweils über eine Ansteuerleitung eine Zeile ausgelesen (IEEE Transactions on Sonics and Ultrasonics, Vol. SU-25, No. 5, Sept. 1978, Seiten 273 bis 280).

Der Erfindung liegt nun die Aufgabe zugrunde, eine Vorrichtung zur Erfassung von Drücken anzugeben, mit der man auch statische Drücke mit einer Zeitkonstante von mehreren Minuten erfassen kann.

Diese Aufgabe wird erfindungsgemäss gelöst mit den kennzeichnenden Merkmalen des Anspruchs 1. Dadurch, dass der Matrix ein zweiter elektronischer Schalter, ein Multiplexer, ein Demultiplexer, ein Analog-Digital-Wandler sowie ein Digital-Analog-Wandler und ein Rechner zugeordnet ist, wird das Wandlersignal differenziert, diskriminiert und anschliessend wieder integriert. Mit dem zweiten entsprechend einem Taktsignal geschalteten elektronischen Schalter wird das Wandlersignal kurzgeschlossen oder einem Rechner zugeführt. Durch das Kurzschliessen des elektromechanischen Wandlers wird das Wandlersignal differenziert.

Ein Verfahren zum Betrieb der erfindungsgemässen Vorrichtung ist im Anspruch 6 angegeben.

Zur weiteren Erläuterung wird auf die Zeichnung Bezug genommen, in der ein Ausführungsbeispiel einer Vorrichtung zur Erfassung von Drücken nach der Erfindung schematisch veranschaulicht ist.

Fig. 1 zeigt eine Vorrichtung gemäss der Erfindung und in den

Fig. 2 bis 6 sind Diagramme veranschaulicht, die einen Signalplan bilden.

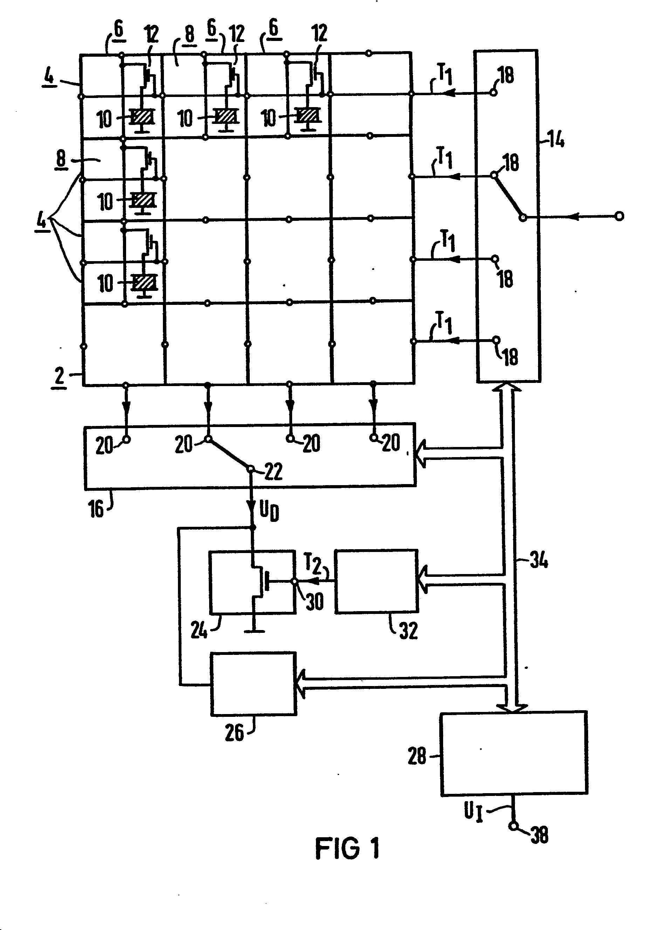

Eine Vorrichtung zur Erfassung von Drücken enthält in der Ausführungsform nach Fig. 1 eine Matrix 2, die in Zeilen 4 und Spalten 6 geordnet ist. Jedes Matrixelement 8, das in einem Kreuzungspunkt jeweils einer Zeile 4 und einer Spalte 6 angeordnet ist, enthält einen elektromechanischen Wandler 10, vorzugsweise eine piezoelektrische Folie aus Polyvinyliden-Fluorid PVDF und einen ersten elektronischen Schalter 12, vorzugsweise einen Feldeffekttransistor FET. Dieser Matrix 2 ist ein Demultiplexer 14 und ein Multiplexer 16 zugeordnet. Jeweils ein Ausgang 18 des Demultiplexers 14 ist mit einer Zeile 4 und jeweils ein Eingang 20 des Multiplexers 16 ist mit einer Spalte 6 der Matrix 2 verbunden. Der Ausgang 22 des Multiplexers 16 ist mit einem zweiten elektronischen Schalter 24, vorzugsweise einem Feldeffekttransistor FET versehen. Ausserdem ist der Ausgang 22 des Multiplexers 16 über einen Analog-Digital-Wandler 26 mit einem Rechner 28 verbunden, der vorzugsweise ein Mikroprozessor sein kann. Der Steuereingang 30 des zweiten elektronischen Schalters 24 ist mit einem Digital-Analog-Wandler 32 versehen. Der Rechner 28 ist über ein Bussystem 34 mit dem Demultiplexer 14, dem Multiplexer 16 sowie dem Analog-Digital-Wandler 26 und dem Digital-Analog-Wandler 32 verbunden. Die elektronischen Schalter 12 und 24 werden gemäss den Taktsignalen $T_1$ und $T_2$ vom Rechner gesteuert. Am Ausgang 22 des Multiplexers 16 erhält man eine Spannung $U_D$, die digitalisiert und im Rechner aufsummiert wird. Am Ausgang 38 des Rechners 28 erhält man eine stufenförmige Spannung $U_I$.

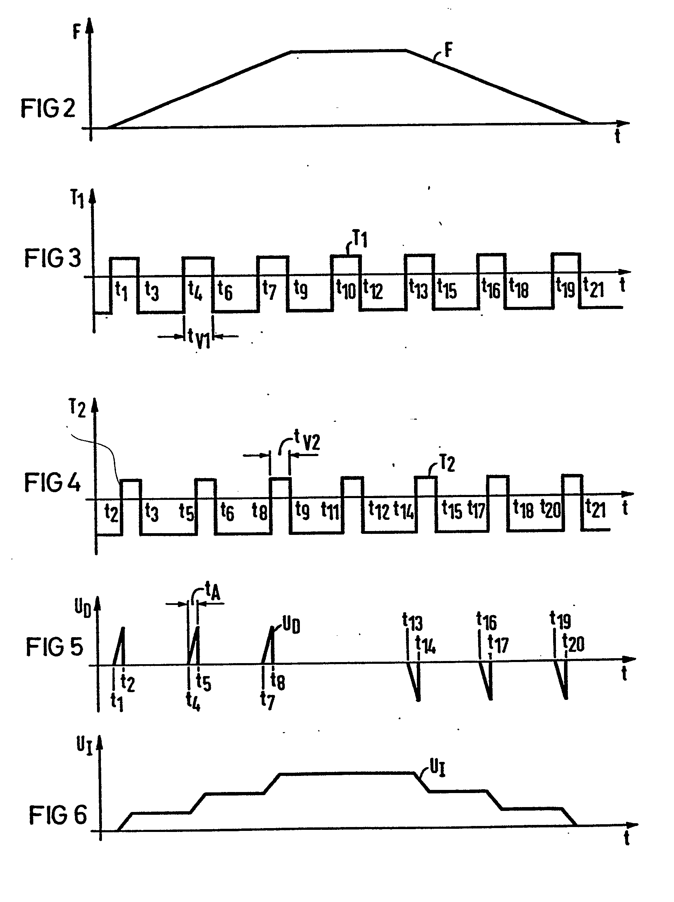

Entsprechend dem Diagramm nach Fig. 2, in dem eine Kraft F über der Zeit t aufgetragen ist, zeigt der Verlauf der Kraft F einen ansteigenden Bereich mit grosser Zeitkonstante, einen statischen Bereich und einen fallenden Bereich mit grosser Zeitkonstante. Diese Kraft F wirkt jeweils auf den elektromechanischen Wandler 10 der Matrix 2 nach Fig. 1.

Gemäss dem Diagramm der Fig. 3, in dem die Taktsignale $T_1$ über der Zeit t aufgetragen sind, bildet dieses Taktsignal eine Pulsfolge mit gleichen zeitlichen Abständen. Die elektromechanische Wandler 10 jeweils einer der Spalten 6 der Matrix 2 werden über den Multiplexer 16 gemäss der Pulsfolge des Taktsignals $T_1$ der elektronischen Schalter 12 mit dem zweiten elektronischen Schalter 24 verbunden. Zu den Zeiten $t_1$, $t_4$, $t_7$, $t_{10}$, $t_{13}$, $t_{16}$ und $t_{19}$ wird jeweils der erste elektronische Schalter 12 einer Zeile 4 leitend und das Wandlersignal wird ausgelesen. Zu den Zeiten $t_3$, $t_6$, $t_9$, $t_{12}$, $t_{15}$, $t_{18}$ und $t_{21}$ wird jeweils der erste elektronische Schalter 12 einer der Zeilen 4 sperrend. Für die Pulsfolgedauer, beispielsweise $t_1$ bis $t_4$,

des Taktsignals $T_1$ wählt man eine Zeit von beispielsweise 10 msec. Die Zeitdauer $t_1$ bis $t_3$, $t_4$ bis $t_6$, $t_7$ bis $t_9$, $t_{10}$ bis $t_{12}$, $t_{13}$ bis $t_{15}$ sowie $t_{16}$ bis $t_{18}$ und $t_{19}$ bis $t_{21}$ ist jeweils die Verweilzeit $t_{V1}$ der elektronischen Schalter 12 der Matrix 2 in der Stellung «ein».

Der zweite elektronische Schalter 24 schliesst die elektromechanischen Wandler 10 jeweils einer der Spalten 6 der Matrix 2 gemäss einer Pulsfolge des Taktsignals $T_2$ entsprechend dem Diagramm der Fig. 4 kurz. Zu den Zeiten $t_2$, $t_5$, $t_8$, $t_{11}$, $t_{14}$ sowie $t_{17}$ und $t_{20}$ wird der zweite elektronische Schalter 24 leitend und zu den Zeiten $t_3$, $t_6$, $t_9$, $t_{12}$, $t_{15}$, $t_{18}$ und $t_{21}$ wieder gesperrt. Für die Pulsfolgedauer, beispielsweise $t_2$ bis $t_5$, des Taktsignals $T_2$ wählt man eine Zeit von beispielsweise 10 msec. Die Zeitdauer $t_2$ bis $t_3$, $t_5$ bis $t_6$, $t_8$ bis $t_9$, $t_{11}$ bis $t_{12}$, $t_{14}$ bis $t_{15}$ sowie $t_{17}$ bis $t_{18}$ und $t_{20}$ bis $t_{21}$ ist jeweils die Verweilzeit $t_{V2}$ des zweiten elektronischen Schalters 24 in der Stellung «ein» und die Verweilzeit $t_{V2}$ kann beispielsweise etwa 1 bis 2 msec betragen. Während der Verweilzeit $t_{V2}$ des zweiten elektronischen Schalters 24 wird jeweils der elektromechanische Wandler 10 einer Spalte 6 der Matrix 2 kurzgeschlossen und die Wandlerladung fliesst ab. Durch das Kurzschliessen dieser elektromechanischen Wandler 10 wird das Wandlersignal differenziert.

Am Ausgang 22 des Multiplexers 16 erhält man entsprechend dem Diagramm der Fig. 5 eine Pulsfolge einer Spannung $U_D$ als differenzierte Form der Kraft F. Die Spannung $U_D$ beginnt jeweils zu den Zeiten $t_1$, $t_4$, $t_7$, $t_{13}$, $t_{16}$ und $t_{19}$, d.h. die Spannung $U_D$ beginnt jeweils mit dem Leitendwerden des elektronischen Schalters 12 jeweils einer der Zeilen 4 der Matrix 2. Die Spannung $U_D$ endet jeweils zu den Zeiten, wenn der zweite elektronische Schalter 24 leitend wird, nämlich zu den Zeiten $t_2$, $t_5$, $t_8$, $t_{14}$, $t_{17}$ und $t_{20}$. Während der Zeitdauer $t_1$ bis $t_2$ sowie $t_4$ bis $t_5$ und $t_7$ bis $t_8$ ist jeweils die Spannung $U_D$ positiv und während der Zeitdauer $t_{13}$ bis $t_{14}$ sowie $t_{16}$ bis $t_{17}$ und $t_{19}$ bis $t_{20}$ ist die Spannung $U_D$ negativ. Diese Zeitdifferenzen stellen jeweils eine Verarbeitungszeit $t_A$ dar, in der das Wandlersignal digitalisiert und im Rechner weiterverarbeitet wird. Die Verarbeitungszeit $t_A$ kann beispielsweise 0,5 bis 1 msec betragen.

Man erhält entsprechend dem Diagramm der Fig. 6 am Ausgang 38 des Rechners 28 eine stufenförmige Spannung $U_I$, deren Abweichungen vom tatsächlichen Verlauf der Kraft F umso geringer sind, je kleiner die Kurzschlusszeiten des Taktsignals $T_2$ sind.

Die Kurzschlusszeit, d.h. die Verweilzeit $t_{V2}$ des zweiten elektronischen Schalters 24 in der Stellung «ein», ist kürzer als die Verweilzeit $t_{V1}$ jeweils der elektronischen Schalter 12 der Matrix 2 in der Stellung «ein». Ausserdem enden die Verweilzeiten $t_{V1}$ der elektronischen Schalter 12 und die Verweilzeit $t_{V2}$ des zweiten elektronischen Schalters 24 gleichzeitig. Die Verweilzeit $t_{V2}$ des zweiten elektronischen Schalters 24 plus die Verarbeitungszeit $t_A$ entspricht der Verweilzeit $t_{V1}$ der ersten elektronischen Schalter 12 der Matrix 2. Die Verweilzeit $t_{V2}$ darf einerseits nicht zu kurz werden, da sonst die Ladung der elektromechanischen Wandler 10 jeweils einer Spalte 6 der Matrix 2 nicht restlos abfliessen kann und somit eine Hochspannung an diesen elektromechanischen Wandlern 10 entstehen kann und andererseits darf die Verweilzeit $t_{V2}$ nicht zu gross werden, da sonst die Verarbeitungszeit $t_A$ zu kurz werden kann und somit der Informationsgehalt des Wandlersignals zu gering ist für eine Weiterverarbeitung. Die Verweilzeit $t_{V2}$ kann beispielsweise etwa 1 bis 2 msec gewählt werden. Die Verarbeitungszeit $t_A$ kann beispielsweise 0,5 bis 1 msec betragen. Durch diese Massnahme erhält man eine Vorrichtung, die nicht nur dynamische sondern auch statische Drücke erfassen kann.

Eine solche Matrixanordnung benötigt man vorzugsweise bei piezoelektrischen Tastaturen für Schreibmaschinen oder Datensichtgeräten und bei piezoelektrischen Sensormatten für den Intrusionsschutz. Da man mit dieser Vorrichtung gemäss der Fig. 1 auch statische Drücke mit einer Zeitkonstante von mehreren Minuten erfassen kann, erhält man eine piezoelektrische Tastatur mit einer «Repeat»-Funktion, d.h. ein gedrücktes Zeichen der Tastatur wird automatisch geschrieben, wenn die entsprechende Taste länger als beispielsweise 0,5 sec gedrückt wird, und mit einer «N-key rollover»-Funktion, d.h. mehrere gleichzeitige gedrückte Tasten werden eindeutig erkannt.

**Patentansprüche**

1. Vorrichtung zur Erfassung von Drücken mit mehreren piezoelektrischen Wandlern (10) und folgenden Merkmalen:

a) die Wandler (10) sind als Matrix (2) in Zeilen (4) und Spalten (6) geordnet,

b) den Wandlern (10) ist jeweils ein erster elektronischer Schalter (12) zugeordnet,

c) die Zeilen (4) der Matrix (2) sind jeweils mit einem Ausgang (18) eines Demultiplexers (14) verbunden,

d) die Spalten (6) der Matrix (2) sind jeweils mit einem Eingang (20) eines Multiplexers (16) verbunden, gekennzeichnet durch folgende Merkmale:

e) der Ausgang (22) des Multiplexers (16) ist mit einem zweiten elektronischen Schalter (24) zum Kurzschliessen der jeweils angesteuerten Wandler (10) einer Spalte (6) und mit einem Analog-Digital-Wandler (26) verbunden,

f) der Steuereingang (30) des zweiten elektronischen Schalters (24) ist an den Ausgang eines Digital-Analog-Wandlers (32) angeschlossen,

g) zur Steuerung des Demultiplexers (14), des Multiplexers (16) und des Digital-Analog-Wandlers (32) ist ein Rechner (28) vorgesehen.

2. Vorrichtung nach Anspruch 1, dadurch gekennzeichnet, dass der Ausgang des Analog-Digital-Wandlers (26) mit dem Rechner (28) verbunden ist.

3. Vorrichtung nach einem der Ansprüche 1 oder 2, dadurch gekennzeichnet, dass für die elektronischen Schalter (12, 24) jeweils ein Taktsignal (T₁, T₂) vorgesehen ist.

4. Vorrichtung nach einem der Ansprüche 1 bis 3, dadurch gekennzeichnet, dass als elektronische Schalter (12, 24) Feldeffekttransistoren FETs vorgesehen sind.

5. Vorrichtung nach einem der Ansprüche 1 bis 4, dadurch gekennzeichnet, dass als Rechner (28) ein Mikroprozessor vorgesehen ist.

6. Verfahren zum Betrieb der Vorrichtung nach einem der Ansprüche 1 bis 5, dadurch gekennzeichnet, dass die Verweilzeit (t$_{V2}$) des zweiten elektronsichen Schalters (24) in der Stellung «ein» geringer ist als die Verweilzeit (t$_{V1}$) des ersten elektronischen Schalters (12) in der Stellung «ein».

7. Verfahren zum Betrieb der Vorrichtung nach Anspruch 6, dadurch gekennzeichnet, dass die Verweilzeit (t$_{V1}$) des ersten elektronischen Schalters (12) und die Verweilzeit (t$_{V2}$) des zweiten elektronischen Schalters (24) gleichzeitig enden.

## Claims

1. A pressure sensing device comprising a plurality of piezoelectric transducers (10), and having the following features:
   a) the transducers (10) are arranged in the form of a matrix (2) of rows (4) and columns (6);
   b) the transducers (10) are each assigned a first electronic switch (12);
   c) the tows (4) of the matrix (2) are each connected to an output (18) of a demultiplexer (14); and
   d) the columns (6) of the matrix (2) are each connected to an input (20) of a multiplexer (16);
   characterised by the following features:
   e) the output (22) of the multiplexer (16) is connected to a second electronic switch (24) which short-circuits the respective driven transducer (10) of a column (6), and to ananalogue/digital converter (26);
   f) the control input (30) of the second electronic switch (24) is connected to the output of a digital/analogue converter (32); and
   g) a computer (28) is provided for controlling the demultiplexer (14), the multiplexer (16) and the digital/analogue converter (32).

2. A device as claimed in Claim 1, characterised in that the output of the analogue/digital converter (26) is connected to the computer (28).

3. A device as claimed in one of Claims 1 or 2, characterised in that a respective clock signal (T₁, T₂) is provided for each of the electronic switches (12, 14).

4. A device as claimed in one of Claims 1 to 3, characterised in that the electronic switches (12, 24) are field-effect transistors (FETs).

5. A device as claimed in one of Claims 1 to 4, characterised in that the computer (28) is a microprocessor.

6. A method of operating a device as claimed in one of Claims 1 to 5, characterised in that the period of dwell (t$_{V2}$) of the second electronic switch (24) in the «on» position is shorter than the period of dwell (t$_{V1}$) of the first electronic switch (12) in the «on» position.

7. A method of operating the device as claimed in Claim 6, characterised in that the period of dwell (t$_{V1}$) of the first electronic switch (12) and the period of dwell (t$_{V2}$) of the second electronic switch (24) end simultaneously.

## Revendications

1. Dispositif pour saisir des pressions, comportant plusieurs transducteurs piézoélectriques (10) et présentant les caractéristiques suivantes:
   a) les transducteurs (10) sont disposés sous la forme d'une matrice (2) suivant des lignes (4) et des colonnes (6),
   b) un premier interrupteur électronique (12) est respectivement associé aux transducteurs (10);
   c) les lignes (4) de la matrice (2) sont reliées respectivement à une sortie (18) d'un démultiplexeur (14),
   d) les colonnes (6) de la matrice (2) sont reliées respectivement à une entrée (20) d'un multiplexeur (16), caractérisé par les moyens suivants:
   e) la sortie (22) du multiplexeur (16) est reliée à un second interrupteur électronique (24) servant à courtcuiter le transducteur (10) respectivement commandé d'une colonne (b), et un convertisseur analogique/numérique (26),
   f) l'entrée de commande (30) du second interrupteur électronique (24) est raccordée à la sortie d'un convertisseur numérique/analogique (32),
   g) il est prévu un calculateur (28) pour la commande du démultiplexeur (14), du multiplexeur (16) et du convertisseur numérique/analogique (32).

2. Dispositif suivant la revendication 1, caractérisé par le fait que la sortie du convertisseur analogique/numérique (26) est reliée au calculateur (28).

3. Dispositif suivant l'une des revendications 1 ou 2, caractérisé par le fait qu'un signal de cadence (T₁, T₂) est prévu respectivement pour les interrupteurs électroniques (12, 24).

4. Dispositif suivant l'une des revendications 2 à 3, caractérisé par le fait que l'on prévoit des transistors à effet de champ FET en tant qu'interrupteurs électroniques (12, 24).

5. Dispositif suivant l'une des revendications 1 à 4, caractérisé en ce qu'un microprocesseur est prévu en tant que calculateur (28).

6. Procédé pour faire fonctionner le dispositif suivant l'une des revendications 1 à 5, caractérisé par le fait que le temps de maintien (t$_{V2}$) du second interrupteur électronique (24) dans la position «fermée» est inférieur au temps de maintien (t$_{V1}$) du second interrupteur électronqiue (12) dans la position «fermée».

7. Procédé pour faire fonctionner le dispositif suivant la revendication 6, caractérisé par le fait que le temps de maintien (t$_{V1}$) du premier interrupteur électronique (12) et le temps de maintien (t$_{V2}$) du second interrupteur électronique (24) se terminent au même moment.

FIG 1

FIG 2

FIG 3

$t_{V1}$

FIG 4

$t_{V2}$

FIG 5

$t_A$

FIG 6